# EUROPEAN PATENT APPLICATION

(11) **EP 4 252 540 A1**
(43) Date of publication of application: **04.10.2023**
(21) Application number: 21898015.9
(22) Date of filing: 25.11.2021
(51) Int. Cl.: A23J 3/00

(54) **TISSUE-FORM PROTEIN INGREDIENT AND METHOD FOR PRODUCING SAME**

(30) Priority: 30.11.2020 JP 2020198520
(71) Applicant: Fuji Oil Holdings Inc., Izumisano-shi, Osaka 598-8540 (JP)
(72) Inventor: HASHIMOTO, Shuzo, Izumisano-shi, Osaka 598-8540 (JP); YANAGISAWA, Masanobu, Izumisano-shi, Osaka 598-8540 (JP); TAKEDA, Mariko, Izumisano-shi, Osaka 598-8540 (JP); SUZUKI, Makoto, Tsukubamirai-shi, Ibaraki 300-2436 (JP); IDE, Misato, Izumisano-shi, Osaka 598-8540 (JP)
(74) Representative: Boult Wade Tennant LLP
(86) International application number: PCT/JP2021/043131
(87) International publication number: WO 2022/114043

(57) **Abstract**

The present invention addresses the problem of providing an ingredient with which it is possible to enhance the fibrous texture of a tissue-form protein ingredient in formation of tissue in which a cooling die is used, the ingredient having suitable firmness and yielding an excellent melt-in-the-mouth sensation. It has been discovered that a tissue-form protein ingredient obtained by: introducing a raw material that contains an oil-in-water emulsified material including water and an oil and fat and preferably furthermore including a protein raw material, and that also contains a powdery or granular protein raw material, into an extruder; kneading and pressure-heating the mixture; and pushing out the raw material under normal pressure using a cooling die positioned at the outlet of the extruder to form tissue, has a fine meat-like fiber structure with suitable firmness and yields an excellent melt-in-the-mouth sensation.

## Description

### Technical Field

The present invention relates to a method for producing a textured protein material which has a dense fiber structure with suitable hardness but has good meltability in the mouth, and the textured protein material.

### Background Art

A textured protein material obtained by swelling a texture of a raw material mixture, which contains a vegetable protein raw material such as soybean and wheat as a main raw material, kneaded with an extruder is conventionally processed so that the textured protein material has an elasticity similar to the livestock meat as a kind of "textured protein material". And, the textured protein material is widely used as a raw material for producing a processed food using livestock meat such as hamburger steak, meatball, gyoza (Chinese-style dumpling), steamed meat bun, shumai (Chinese-style steamed meat dumpling), minced meat cutlet, croquette and soboro (minced meat). In addition, a textured protein material itself is often cooked directly and used as a meat alternative such as deep-fried chicken or char siu (Chinese-style barbecued pork). In recent years, a soy puff with a light texture (feeling) has been increasingly used for cereal bar and granola.

In recent years, patent applications have been filed for combining a protein raw material with an auxiliary raw material to create a textured protein material having a characteristic food texture (feeling). The applicant also patented a technique capable of adding an oat fiber as an auxiliary raw material to realize a textured protein material having a more appropriate hardness and a meat-like texture (feeling) with a meat-like loosening feeling (Patent Document 1).

The textured protein material is usually produced by introducing a raw material containing water and a powder raw material such as a protein raw material into an extruder, kneading and pressurizing and heating the raw material mixture, extruding the raw material mixture under normal pressure from a die installed at an outlet of the extruder to be texturize, and drying the obtained product.

Many of the textured soybean proteins have a grain shape, and the grain shape is roughly divided into two types. These are a granular shape in which a material extruded from a die is used as it is and a fine shape processed using a pulverizer after being extruded from a die. The former is mainly used for providing the chewability of the final product, and the latter is mainly used for providing softness and juicy feeling.

In addition, many new type textured protein food products having a tissue and texture similar to those of meat or adductor have been developed and appeared on the market. Such textured protein food products are produced by using a jacket cooling-type die called a cooling die after kneading in the extruder to process the tissue into a film shape or a fiber shape. The present production method has an advantage that a dense and long fiber can be produced as compared with the above expanded textured product.

In order to perform expansion, high temperature and high pressure are applied at the die portion. When the hole diameter of the die is large, the tissue of the kneaded raw material cannot withstand its expansion due to volatilization of moisture and pressure applied from the screw of the extruder, and is broken and scattered. It is therefore difficult to form a large shape with an expanded textured product. The present production method involves cooling and employs reduced pressure, and thus has an advantage that a large shape such as steak meat is easily formed.

### Prior Art Documents

### Patent Documents

Patent Document 1: JP 5794373 B
Patent Document 2: US 2014/0127363 A1
Patent Document 3: JP H01-067153 A
Patent Document 4: JP S63-192348 A
Patent Document 5: JP 4780099 B

### Disclosure of the Invention

### Technical Problem

However, when a protein material is texturized using a cooling die, there is a problem that elasticity at the time of biting is strong due to the denseness of the tissue of the textured product, leading to a gel-like texture like a boiled fish-paste. It is difficult to say that the texture of such a textured product is similar to that of meat which is easily loosened. Further, such a textured product has a problem of having poor meltability in the mouth and exhibiting poor sensation in the throat, and being hard to swallow.

It is preferable to use fat as a method for solving the problems of meltability in the mouth and sensation in the throat. There are methods such as marination in which a textured protein material texturized using a cooling die is mixed with fat, a method of adding fat at the time of texturizing and kneading the fat into dough, or a method of texturizing a protein material containing fat, such as soybean flour. Regarding the marination in which fat is mixed with a textured protein material, the fat is not incorporated in the tissue. Therefore, the resulting textured protein material tends to remain in the mouth as compared with a textured protein material produced by the latter methods in which the fat is incorporated in the tissue.

Patent Document 2 reports a method for developing a textured protein material having a meat texture by kneading fat at the time of texturizing.

Meanwhile, there is a problem that the texture becomes soft when fat is kneaded in the protein material. When the dough is kneaded in the extruder, mechanical shear stress is applied to the dough by the screw inside the barrel. As a result, the three-dimensional structure of the protein is disentangled and rearranged to form a fiber tissue. However, the presence of fat weakens the friction between the screw and the dough, and thus weakens the mechanical shear stress. As a result, binding between proteins does not sufficiently proceed, and the operation of the extruder becomes unstable, resulting in a textured product with soft texture. Therefore, in the method disclosed in Patent Document 2, it is difficult to produce hard and meat-like fibers.

In Patent Document 3, soybean flour containing fat is texturized by a jacket with an extruder and a condenser tube. Patent Document 3 reports a production method in which a pressure change during operation is suppressed by addition of a sucrose fatty acid ester and stable operation can be performed. However, the die in Patent Document 3 has a very small hole diameter of 2.5 cm2, and texturizing is difficult with such a die. Similarly to the texturizing of Patent Document 2, it is difficult to perform texturizing for imparting a hard texture in soybean flour.

Meanwhile, there is also an example in which fat is mixed in advance with proteins, carbohydrates and moisture, and kneaded with an extruder. Patent Document 4 discloses a production method including adding edible fat, and if necessary, a molten salt to rennet casein, further adding whey protein, soybean protein or gluten thereto, followed by mixing in the presence of water, and then heating and emulsifying the mixture by an extruder. Although a cheese having a fibrous property can be produced by this method, the resulting cheese fiber having a uniform tissue is softer than the textured product of Patent Document 2, and thus does not become a meat-like hard fiber.

As described above, when a dough emulsified in advance is added, hard and meat-like fibers cannot be formed. Further, even when oil is separately added at the time of texturizing the protein, meat-like fibers having sufficient hardness cannot be formed. On the other hand, when oil is not blended, hard meat-like fibers are formed, but meltability in the mouth and sensation in the throat are deteriorated. There has been a demand for a material that has suitable hardness as well as good meltability in the mouth.

Therefore, an object of the present invention is to provide a material capable of enhancing fibrous texture of a textured protein material in texturizing using a cooling die, and also having suitable hardness and favorable meltability in the mouth.

### Solution to Problem

The present inventors have intensively studied to solve the above problem. As a result, they have found that a textured protein material obtained by the following method has suitable hardness and a dense meat-like fiber structure as well as favorable meltability in the mouth, the method including introducing a raw material containing: an oil-in-water emulsion containing water, fat, and preferably further a protein raw material; and a powdery or granular protein material into an extruder, kneading, pressurizing and heating the raw material, and extruding the raw material under normal pressure from a cooling die installed at the outlet of the extruder to texturize the raw material. The present invention has been completed by the finding.

That is, the present invention is:
(1) a textured protein material having the following characteristics (A) to (C):
   (A) the textured protein material contains 40 to 79.9 wt% moisture, 20 to 40 wt% protein and 0.1 to 15 wt% fat;
   (B) the textured protein material has a maximum load of 15N or more; and
   (C) the textured protein material has a dense meat-like fiber structure;
(2) a method for producing a textured protein material having the following characteristics (A) to (C),
   the method including:
   introducing a raw material containing: an oil-in-water emulsion containing water and fat, and a powdery or granular protein raw material, into an extruder, kneading, pressurizing and heating the raw material, and extruding the raw material under normal pressure from a cooling die installed at an outlet of the extruder to texturize the raw material:
   (A) the textured protein material contains 40 to 79.9 wt% moisture, 20 to 40 wt% protein, and 0.1 to 15 wt% fat;
   (B) the textured protein material has a maximum load of 15N or more; and
   (C) the textured protein material a dense meat-like fiber structure;
(3) the method for producing a textured protein material of (2), wherein the oil-in-water emulsion further contains a protein raw material;
(4) the method for producing a textured protein material of (2) or (3), wherein the raw material contains 0.1 to 30 wt% oil-in-water emulsion and 10 to 40 wt% powdery or granular protein material;
(5) the method for producing a textured protein material of (2), wherein the oil-in-water emulsion contains 5 to 70 wt% fat;
(6) the method for producing a textured protein material of (3), wherein the oil-in-water emulsion contains 5 to 70 wt% fat;
(7) the method for producing a textured protein material of (4), wherein the oil-in-water emulsion contains 5 to 70 wt% fat;
(8) the method for producing a textured protein material of (5), wherein the oil-in-water emulsion contains 5 to 70 wt% fat and 1 to 8 wt% protein raw material;
(9) the method for producing a textured protein material of (6), wherein the oil-in-water emulsion contains 5 to 70 wt% fat, and 1 to 8 wt% protein raw material;
(10) the method for producing a textured protein material of (7), wherein the oil-in-water emulsion contains 5 to 70 wt% fat, and 1 to 8 wt% protein raw material;
(11) the method for producing a textured protein material of (8), wherein the oil-in-water emulsion contains 5 to 70 wt% fat, and 1 to 8 wt% protein raw material;
(12) a meat substitute containing the textured protein material of (1); and
(13) use of the textured protein material of (1) as a meat substitute.

In addition, in other words, the present invention is:
(14) a textured protein material having the following characteristics (A) to (C):
   (A) the textured protein material contains 40 to 79.9 wt% moisture, 20 to 40 wt% protein, and 0.1 to 15 wt% fat;
   (B) the textured protein material has a maximum load of 15N or more; and
   (C) the textured protein material has a dense meat-like fiber structure;
(15) a method for producing a textured protein material having the following characteristics (A) to (C),
   the method including:
   introducing a raw material containing: an oil-in-water emulsion containing water and fat, and a powdery or granular protein raw material, into an extruder, kneading, pressurizing and heating the raw material, and extruding the raw material under normal pressure from a cooling die installed at an outlet of the extruder to texturize the raw material:
   (A) the textured protein material contains 40 to 79.9 wt% moisture, 20 to 40 wt% protein, and 0.1 to 15 wt% fat;
   (B) the textured protein material has a maximum load of 15 N or more; and
   (C) the textured protein material has a dense meat-like fiber structure;
(16) the method for producing a textured protein material of (15), wherein the oil-in-water emulsion further contains a protein raw material;
(17) the method for producing a textured protein material of (15) or (16), wherein the raw material contains 0.1 to 30 wt% oil-in-water emulsion and 10 to 40 wt% powdery or granular protein material;
(18) the method for producing a fibrous protein material of any one of (15) to (17), wherein the oil-in-water emulsion contains 5 to 70 wt% fat;
(19) the method for producing a textured protein material of (18), wherein the oil-in-water emulsion contains 5 to 70 wt% fat and 1 to 8 wt% protein raw material;
(20) a meat substitute containing the textured protein material of (1); and
(21) use of the textured protein material of (1) as a meat substitute.

### Effect of the Invention

The present invention enables to produce a textured protein material having a dense meat-like fiber structure, and having suitable hardness and favorable meltability in the mouth by a method of texturizing using a cooling die.

### Brief Description of Drawings

[Fig. 1] Fig. 1 is a view illustrating a method for preparing a sample of a textured protein material to be used for measurement of the maximum load.
[Fig. 2] Fig. 2 is a graph showing the value of the maximum load of a textured protein material.
[Fig. 3] Fig. 3 is a view illustrating a preparation method of a section for tissue observation of a textured protein material.
[Fig. 4] Fig. 4 is a photograph substituted for the drawing of tissue observation of a textured protein material.

### Mode for Carrying Out the Invention

Hereinafter, embodiments of the present invention will be described in detail.

### (Textured protein material)

The textured protein material of the present invention has the following characteristics (A) to (C). That is, (A) the textured protein material contains 40 to 79.9 wt% moisture, 20 to 40 wt% protein, and 0.1 to 15 wt% fat, (B) the textured protein material has a maximum load of 15N or more, and (C) the textured protein material has a dense meat-like fiber structure.

The textured protein material of the present invention has suitable hardness, a dense meat-like fiber structure, and favorable meltability in the mouth.

The content of the moisture in the textured protein material is preferably 45 to 70 wt%, and more preferably 45 to 65 wt%. The content of the protein in the textured protein material is preferably 22 to 40 wt%, and more preferably 25 to 40 wt% or 25 to 35 wt%. The content of the fat in the textured protein material is preferably 2 to 12 wt%, and more preferably 3 to 11 wt% or 3 to 8 wt%.

Since the textured protein material of the present invention is required to have suitable hardness, the maximum load is required to be 15N or more, and preferably 17N or more. The upper limit of the maximum load may be preferably 100N or less, more preferably 90N or less, and further preferably 80N or less. When the maximum load of the textured protein material of the present invention falls within such a range, it is possible to realize good meltability in the mouth. The textured protein material of the present invention is also required to have both hardness and good meltability in the mouth. A smaller number of times of chewing from the beginning of chewing to swallowing is better. When the maximum load is too large, meltability in the mouth may be deteriorated. When the maximum load is too small, meltability in the mouth is too good, so that meat-like fibrous texture cannot be felt. Meltability in the mouth is better as the number of times of chewing from the beginning of chewing of the textured protein material to swallowing is smaller. As described later, meltability in the mouth is evaluated using a ratio of the number of times of chewing of the textured protein material of the present invention when the number of times of chewing of a textured protein material prepared using only soybean protein and water as raw materials is 1.

### (Method for producing textured protein material)

According to the method for producing a textured protein material of the present invention, a textured protein material may be produced by introducing a raw material containing an oil-in-water emulsion containing water and fat, or a raw material containing an oil-in-water emulsion containing water, fat and a protein raw material, and a powdery or granular protein raw material, into an extruder, pressurizing and heating the raw material while kneading the raw material with a screw in the apparatus, and then extruding the raw material under normal pressure through a hole in a jacket-type condenser tube portion called a cooling die installed at the outlet of the extruder to texturize the raw material.

### (Extruder)

The texturizing of the textured protein material of the present invention is performed using an extruder apparatus. An extruder generally has a mechanism for feeding a raw material from a raw material supply port by a screw installed in a barrel, and kneading, pressurizing (compressing) and heating the raw material. The extruder has a die that has a hole of various shapes and that is attached to the tip (outlet) of the barrel.

The extruder that may be used is not limited, and a single-screw extruder, a twin-screw extruder, or a triple or more-screw extruder may be used. Among them, a twin-screw extruder may be suitably used.

### (Operating condition of extruder)

The operating conditions for supplying the raw material for producing the textured protein material to the extruder and extruding the raw material from the die under pressurizing and heating may be appropriately selected and adjusted based on known conditions. As a non-limiting example of the heating condition, the temperature of the barrel tip is preferably 100 to 220°C, and more preferably 120 to 180°C.

As the pressurizing condition, the die pressure at the barrel tip is preferably 0.01 to 10 MPa, and more appropriately 0.1 to 4 MPa.

### (Die)

A jacket cooling-type die is essential for the die installed at the outlet of the extruder. The shape of the die is preferably a circle, a rectangle etc. Since the opening area of the die correlates with the flow rate of the extruder, it is possible to appropriately set an optimum size according to the operating conditions. For example, it is necessary to increase the opening area in a case where mass production is desired, and it is necessary to reduce the processing amount in a case where a small opening area is desired.

### (Water addition)

When the raw material of the textured protein material is supplied to the extruder, water is added. In the case of the method for producing a textured protein material of the present invention, it is appropriate to add water so that the content of the moisture in the entire raw material to be supplied to the extruder is preferably 40 to 90 wt%, and more preferably 50 to 75 wt%.

Further, a part or all of the moisture to be used in the present invention may be derived from a raw material containing a powdery or granular protein raw material and an oil-in-water emulsion.

### (Oil-in-water emulsion)

The oil-in-water emulsion of the present invention contains fat and either or both of a protein raw material and an emulsifier.

When the raw material is texturized, the oil-in-water emulsion is blended in the raw material in an amount such that the lower limit of the content of the fat in the oil-in-water emulsion is preferably 0.005 wt% or more. The lower limit may be more preferably, for example, 0.01 wt% or more, 0.015 wt% or more, 0.25 wt% or more, 0.5 wt% or more, 0.75 wt% or more, 1 wt% or more, 1.5 wt% or more, 2.5 wt% or more, 3 wt% or more, 4 wt% or more, or 4.5 wt% or more.

As the upper limit, the oil-in-water emulsion is blended so that the content of the fat in the oil-in-water emulsion is preferably 21 wt% or less. The upper limit may be more preferably 20 wt% or less, 18 wt% or less, or 17 wt% or less.

The content of the fat may be, for example, 0.005 to 21 wt%, 0.5 to 21 wt%, 1 to 21 wt%, 1.5 to 21 wt%, 2.5 to 21 wt%, 3 to 21 wt%, 4 to 21 wt%, 4.5 to 21 wt%, 0.005 to 20 wt%, 0.5 to 20 wt%, 1 to 20 wt%, 1.5 to 20 wt%, 2.5 to 20 wt%, 3 to 20 wt%, 4 to 20 wt%, 4.5 to 20 wt%, 0.005 to 18 wt%, 0.5 to 18 wt%, 1 to 18 wt%, 1.5 to 18 wt%, 2.5 to 18 wt%, 3 to 18 wt%, 4 to 18 wt%, 4.5 to 18 wt%, 0.005 to 17 wt%, 0.5 to 17 wt%, 1 to 17 wt%, 1.5 to 17 wt%, 2.5 to 17 wt%, 3 to 17 wt%, 4 to 17 wt%, or 4.5 to 17 wt%.

As the amount of the oil-in-water emulsion in the raw material, for example, the oil-in-water emulsion may be blended in an amount of preferably 0.1 to 30 wt%, more preferably 5 to 30 wt%, and further preferably 10 to 25 wt% so as to satisfy the amount of the fat.

The moisture of the oil-in-water emulsion to be blended may be optionally selected. The amount of moisture in the oil-in-water emulsion may be, for example, about 0.1 to 99 wt%, preferably 1 to 90 wt%, 5 to 90 wt%, 10 to 90 wt%, 15 to 90 wt%, 20 to 90 wt%, 25 to 90 wt%, 30 to 90 wt%, 1 to 85 wt%, 5 to 85 wt%, 10 to 85 wt%, 15 to 85 wt%, 20 to 85 wt%, 25 to 85 wt%, or 30 to 85 wt%.

### (Fat)

Examples of the fat used in the oil-in-water emulsion of the present invention include vegetable fat such as palm oil, coconut oil, palm kernel oil, soybean oil, rapeseed oil, sunflower seed oil, cottonseed oil, peanut oil, rice bran oil, corn oil, safflower oil, olive oil, kapok oil, moringa oil, sesame oil, and evening primrose oil; and medium-chain fatty acid triglyceride. The use of animal fat such as milk fat, beef tallow, and lard is not hindered. Single or mixed oils of the above fats, or hydrogenated oil, fractionated oil, hydrogenated fractionated oil, fractionated hydrogenated oil, and processed fat subjected to interesterification of the above fats may be used.

The oil-in-water emulsion used in the present invention preferably contains fat in an amount of 5 to 70 wt%, more preferably 10 to 70 wt%, further preferably 15 to 65 wt%.

When the oil-in-water emulsion contains 5 to 70 wt% fat, suitable hardness may be imparted to the textured protein material.

### (Protein raw material used for oil-in-water emulsion)

The protein raw material used for the oil-in-water emulsion of the present invention may be of any origin. Examples thereof include protein derived from oil seed such as soybean, pea, mung bean, chickpea, rapeseed, cottonseed, peanut, sesame, safflower, sunflower, corn, safflower and coconut; proteins derived from grain seed such as rice, barley and wheat; and animal protein derived from milk. Among the above raw materials, particularly, a protein material derived from soybean as described in Examples and a protein material derived from an oil seed which may be substituted for the soybean-derived protein material are preferable. Among the oil seeds, a protein material derived from bean is more preferable.

The form of the protein is not limited, and examples thereof include liquid, a pulverized product, a protein extract, a protein concentrate and a protein isolate.

The oil-in-water emulsion used in the present invention preferably contains a protein raw material in an amount of preferably 1 to 8 wt%, more preferably 1 to 7 wt%.

### (Emulsifier)

An emulsifier may be added to the oil-in-water emulsion used in the present invention as necessary. The blending amount of the emulsifier is preferably 0.001 to 2 wt% with respect to the weight of the oil-in-water emulsion.

The emulsifier may be of any type, and examples thereof include synthetic emulsifier such as lecithin, monoglyceride, sorbitan fatty acid ester, propylene glycol fatty acid ester, polyglycerin fatty acid ester, polyoxyethylene sorbitan fatty acid ester and sucrose fatty acid ester. One or more of these emulsifiers may be appropriately selected and used.

In addition, if desired, the emulsifier may contain a thickener, a salt, a flavor, a pigment or a preservative.

Incidentally, the content of the moisture in the textured product obtained by supplying the raw material for producing the textured protein material to the extruder and extruding the raw material is 40 to 80 wt%. The lower limit of the content may be preferably 45 wt% or more, or 50 wt% or more. The upper limit of the content may be preferably 75 wt% or less, 70 wt% or less, or 65 wt% or less.

More specifically, the content may be, for example, 45 to 70 wt%, or 50 to 65 wt%.

When the content of the moisture in the textured product is set within the above range, it is possible to produce a textured protein material having a dense meat-like fiber structure with suitable hardness, but having favorable meltability in the mouth as described later.

### (Powdery or granular protein raw material)

In the present invention, the "powdery or granular protein raw material" refers to a raw material for texturizing, which is to be introduced into an extruder in order to produce a textured protein material and which contains a protein. Specifically, a preferred aspect thereof is one in which a vegetable protein raw material is used.

In the present invention, the "powdery or granular protein raw material" is different from the "protein raw material used for oil-in-water emulsion" described in paragraph 0027. That is, the "powdery or granular protein raw material" is used as a raw material separately from the "protein raw material used for oil-in-water emulsion" at the time of texturizing.

The "vegetable protein raw material" refers to a protein material derived from a plant. Examples thereof include a protein material derived from oil seed such as soybean, pea, mung bean, chickpea, rapeseed, cottonseed, peanut, sesame, safflower, sunflower, corn, safflower and coconut; and a protein material derived from grain seed such as rice, barley and wheat. The protein material is a pulverized product, a protein extract, a protein concentrate or a protein isolate of the above plants. Examples of the protein material include rice glutelin, barley prolamin, wheat prolamin, wheat gluten, full fat soybean flour, defatted soybean flour, soybean protein concentrate, soybean protein isolate, pea protein isolate and mung bean protein isolate. As the vegetable protein raw material, in particular, a protein material derived from soybean as described in Examples and a protein material derived from an oil seed which may be substituted for the soybean-derived protein material are preferable. Among the oil seeds, a protein material derived from bean is more preferable.

Here, a typical and non-limiting production example of the soybean protein isolate using soybean as an example will be described below. Even when other vegetable raw materials are used, a vegetable protein isolate may be produced according to the following production example.

### I) Extraction step

Defatted soybean is used as a soybean raw material. Water is added to defatted soybean and stirred to prepare a suspension (slurry), and protein is extracted with water. The water may have a pH in the range of neutral to alkaline, and may also contain a salt such as calcium chloride. Soy pulp is separated by a solid-liquid separation mean such as centrifugation to obtain a protein extract (so-called soy milk). A product obtained by heat-sterilizing and spray-drying the protein extract at this stage is a so-called defatted soy milk powder, and this may also be used as a powdery vegetable protein material.

### II) Acid precipitation step

Next, an acid such as hydrochloric acid or citric acid is added to the protein extract. The pH of the extract is adjusted to pH 4 to 5, which is the isoelectric point of the soybean protein, and the protein is insolubilized to cause acid precipitation. Next, a supernatant (so-called whey) containing a carbohydrate or ash which is an acid-soluble component is removed by a solid-liquid separation mean such as centrifugation to recover an "acid precipitation card" containing an acid-insoluble component. A product obtained by spray-drying the acid precipitation card at this stage is a so-called card powder, and this may also be used as a powdery vegetable protein material.

### III) Neutralization step

Next, water is added again to the acid precipitation card, and the card is washed with water as necessary to obtain a "card slurry". Then, the slurry is neutralized by adding an alkali such as sodium hydroxide and potassium hydroxide to obtain a "neutralized slurry".

### IV) Sterilization and powdering step

Next, the neutralized slurry is heat-sterilized, spraydried with, for example, a spray dryer, and subjected to fluidized bed granulation as necessary to obtain a soybean protein isolate.

However, the soybean protein isolate in the present invention is not limited to those produced in the above production examples. As the soybean raw material, various soybean raw materials such as full fat soybean and partially defatted soybean may be used instead of defatted soybean. Various extraction conditions and apparatuses may be applied to the extraction means. As a method for removing whey from the protein extract, membrane concentration using, for example, an ultrafiltration membrane may be performed instead of acid precipitation. In this case, a neutralization step is not necessarily required. Further, the soybean protein isolate may also be produced by applying a method of previously washing the soybean raw material with acidic water or alcohol to remove whey, and then extracting protein with neutral or alkaline water. In addition, it is also possible to partially hydrolyze the protein by causing protease to act on the protein solution at any of the above stages.

The protein raw material used in the present invention is in a particulate form. That is, the protein raw material used in the present invention may be in a powdery form or in a granular form. Note that, in the case of a granular form, the particle size is preferably as small as possible. The particle size is preferably 2 mm or less, and more preferably 1 mm or less.

The protein content in the solid content in the protein raw material is preferably as high as possible in order to satisfy the protein content in the solid portion of the textured protein material. In the present production method, since the amount of moisture is large, the protein content in the solid content needs to be as high as possible. Specifically, the protein content may be preferably 50 wt% or more, and more preferably 60 wt% or more, 70 wt% or more, or 75 wt% or more. The protein content may be 95 wt% or less, 92 wt% or less, or 91 wt% or less.

The protein content is obtained by determining the total nitrogen content in a sample by the Kjeldahl method, and multiplying the total nitrogen content by 6.25 as a coefficient. The protein content is measured as a percentage with respect to the sample and expressed in terms of solid content.

### (Other raw materials for texturizing)

As the raw material for texturizing of the present invention, various other auxiliary raw materials may be added. For example, fat, alkali metal salt such as sodium chloride, animal protein such as egg white and casein, carbohydrate such as starch and polysaccharide, dietary fiber, emulsifier, flavor, and other known additives may be appropriately added as long as the effects of the present invention are not hindered. However, in a case where a plant-based textured protein material is to be produced, the animal protein is preferably not contained therein.

In general, the mixing ratio of the protein raw material in the solid content of the raw material for producing the textured protein material may be appropriately set in consideration of the balance with other raw materials depending on the required quality. The mixing ratio is preferably as high as possible in order to satisfy the protein content of the textured protein material. Therefore, the protein raw material is blended so that the protein content in the entire raw material is 50 wt% or more. Preferably, the protein content may be 60 wt% or more, 65 wt% or more, or 70 wt% or more. The upper limit of the content may be 95 wt%, and may be 90 wt% or less or 85 wt% or less.

### (Application)

The textured protein material obtained by the present invention has hard and dense fibers as well as good meltability in the mouth. Therefore, the textured protein material may be used for products produced by using meat or fish meat, or plant-derived meat substitute products.

The textured protein material may be used, for example, as a fibrous texture reinforcing material for processed food such as hamburger steak, meatball, nugget, gyoza (Chinese-style dumpling), steamed meat bun, shumai (Chinese-style steamed meat dumpling), minced meat cutlet, croquette, soboro (minced meat) and grilled meatball.

Further, the textured protein material of the present invention may also be directly cooked and used as a meat-like raw material for a sliced meat such as char siu (Chinese-style barbecued pork), and a snack.

When the maximum load of the textured protein material is 15N or more, the textured protein material may be used as a material for reinforcing fibrous texture of the foods described above. Preferably, the maximum load of the textured protein material is 100N or less.

### Examples

Hereinafter, the present invention will be described by Examples. Note that parts and % in the Examples are based on weight unless otherwise specified.

### (Preparation of oil-in-water emulsion)

### (Oil-in-water emulsion A)

To 40.0 parts water, 0.95 part emulsifier and 0.10 part sodium caseinate "Sodium Caseinate 180" (manufactured by Fonterra Limited) were added, and this was mixed and dissolved to prepare an aqueous phase. The prepared aqueous phase and 60.0 parts rapeseed oil were stirred with a homomixer at 68°C for 30 minutes to be preliminarily emulsified, and homogenized at a homogenization pressure of 3 MPa. The resulting emulsion was sterilized by a direct heating method at 144°C for 4 seconds using an ultra-high temperature sterilizer (manufactured by Iwai Kikai Kogyo Co., Ltd.), then homogenized again under the condition of 12 MPa, and immediately cooled to 5°C. After cooling, the resulting emulsion was aged for about 24 hours to obtain an oil-in-water emulsion A.

### (Oil-in-water emulsion liquid B)

To 26.7 parts random transesterified fat (melting point: 32°C) of palm kernel oil and palm oil, 10.5 parts hydrogenated palm kernel oil (melting point: 34°C), and 8.5 parts refined palm kernel oil (melting point: 28°C), 0.41 part emulsifier was added, and this was mixed and dissolved to prepare an oil phase.

In addition, 11.8 parts skimmed concentrated milk, 2.0 parts egg yolk, 0.14 part emulsifier, 0.06 part sodium metaphosphate, and 0.07 part pH adjuster were added to 40.4 parts water, and this was mixed and dissolved to prepare an aqueous phase.

The prepared aqueous phase and oil phase were stirred with a homomixer at 60°C for 30 minutes to be preliminarily emulsified, and homogenized at a homogenization pressure of 2 MPa. The resulting emulsion was sterilized by a direct heating method at 144°C for 4 seconds using an ultra-high temperature sterilizer (manufactured by Iwai Kikai Kogyo Co., Ltd.), then homogenized again under the condition of 3.2 MPa, and immediately cooled to 7°C. After cooling, the resulting emulsion was aged for about 24 hours to obtain an oil-in-water emulsion B.

### (Oil-in-water emulsion C)

To 71 parts water, 6.0 parts powdery soybean protein (protein content: 87%) was added, and this was mixed and dissolved to prepare an aqueous phase. The prepared aqueous phase and 23.0 parts rapeseed oil were stirred with a homomixer at 68°C for 30 minutes to be preliminarily emulsified, and homogenized at a homogenization pressure of 4 MPa. The resulting emulsion was sterilized by a direct heating method at 144°C for 4 seconds using an ultra-high temperature sterilizer (manufactured by Iwai Kikai Kogyo Co., Ltd.), and then homogenized again under the condition of 9 MPa, and immediately cooled to 10°C. After cooling, the resulting emulsion was aged for about 24 hours to obtain an oil-in-water emulsion C.

The formulation table of the oil-in-water emulsions A to C is shown in Table 1.

**(Table 1) Formulation of oil-in-water emulsion**

| | Oil-in-water emulsion A | Oil-in-water emulsion B | Oil-in-water emulsion C |
|---|---|---|---|
| Moisture (part) | 39.6 | 49.3 | 71.3 |
| Lipid (part) | 60.3 | 46.6 | 23 |
| Protein (part) | 0.1 | 1.7 | 5.2 |
| Others (part) | 0 | 2.4 | 0.5 |
| Emulsifier (part) | 0.95 | 0.55 | 0 |

### (Examples 1 to 6, Comparative Examples 1 to 3)

Based on the formulations shown in Table 2, a raw material containing a protein raw material and water, and each of the oil-in-water emulsions A to C or fat was introduced into an extruder, kneaded, and pressurized and heated. The raw material was then extruded under normal pressure from a cooling die installed at the outlet of the extruder to texturize the raw material, thereby obtaining a textured product. A twin-screw extruder was used as the extruder, and the extruder was operated under the control of 80°C to 100°C on the inlet side, 140°C to 180°C on the outlet side, and a die pressure at the barrel tip of 0.01 to 1 MPa. Water was added so that the content of the moisture in the entire raw material was 50 to 70%. A circular cooling die was used, and a cooling die having a diameter of 20 mm was used.

Regarding the formulations shown in Table 2, in Comparative Example 2 and Examples 1 to 3, the additive oil was added so as to be 5% in all formulations. That is, in Comparative Example 2 and Examples 1 to 3, the moisture content, the oil and fat content, and the protein content in the formulation are almost the same.

**(Table 2)**

| | Comparative Example 1 | Comparative Example 2 | Example 1 | Example 2 | Example 3 | Comparative Example 3 | Example 4 | Example 5 | Example 6 |
|---|---|---|---|---|---|---|---|---|---|
| Powdery soybean protein (part) (protein content: 90%) | 33 | 33 | 33 | 34 | 33 | - | - | 33 | 33 |
| Defatted soybean (part) (protein content: 52%) | - | - | - | - | - | 33 | - | - | - |
| Soybean protein concentrate (protein content: 70%) | - | - | - | - | - | - | 33 | - | - |
| Water (part) | 67 | 62 | 59 | 56 | 47 | 59 | 59 | 59 | 59 |
| Palm oil (part) | - | 5 | - | - | - | - | - | - | - |
| Oil-in-water emulsion liquid A (part) | - | - | 8 | - | - | 8 | 8 | 16 | 24 |
| Oil-in-water emulsion liquid B (part) | - | - | - | 10 | - | - | - | - | - |
| Oil-in-water emulsion liquid C (part) | | - | - | - | 20 | - | - | - | - |
| Protein concentration (part) | 29.7 | 29.7 | 29.7 | 30.6 | 29.7 | 17.16 | 23.1 | 29.7 | 29.7 |
| Fat concentration (part) | 0.03 | 5 | 5 | 5 | 5 | 5 | 5 | 10 | 15 |

The obtained textured protein materials were tasted and evaluated by 10 panelists skilled in sensory evaluation of fibrous texture and feeling of melt in the mouth of the textured protein material. Sensory evaluation on fibrous texture and feeling of melt in the mouth was performed based on the following evaluation criteria, and determination was made by discussion of panelists. The results are shown in Table 3.

### <Evaluation criteria>

### - Sensory evaluation on fibrous texture

| | |
|---|---|
| ⊙: | Very strong fibrous texture is felt. |
| ○: | Strong fibrous texture is felt. |
| △: | Fibrous texture is felt. |
| ×: | No fibrous texture is felt. |

A case where the evaluation was ⊙, ○, or △ was determined to have fibrous texture and to be favorable.

### - Sensory evaluation on feeling of melt in mouth

The obtained textured protein material was cut into a semicircular column having a diameter of 2 cm and a height of 2 cm, and tasted by 10 panelists. The number of times of chewing from the beginning of chewing to swallowing of the sample was counted for each panelist, and the ratio was calculated with Comparative Example 1 as 1. A case where the number of times of chewing was 10% or more smaller than that in Comparative Example 1, that is, a case where the ratio was 0.9 or less was evaluated as acceptable.

**(Table 3)**

| | Comparative Example 1 | Comparative Example 2 | Example 1 | Example 2 | Example 3 | Comparative Example 3 | Example 4 | Example 5 | Example 6 |
|---|---|---|---|---|---|---|---|---|---|
| Fibrous texture evaluation | × | × | ○ | ⊙ | ⊙ | × | Δ | ○ | Δ |
| Meltability in mouth evaluation | 1 | 0.52 | 0.75 | 0.66 | 0.82 | 0.95 | 0.69 | 0.57 | 0.48 |

In Comparative Example 1, elastic texture like rubber was strong, and although hardness was felt, no fibrous texture was felt, and meltability in the mouth was very poor. In Comparative Example 2 in which palm oil was blended as a raw material, soft texture was felt and meltability in the mouth was favorable, but no fibrous texture was felt.

Meanwhile, in Examples 1 to 3 in which an oil-in-water emulsion was blended as a raw material, the textured protein materials had suitable hardness, but were not a rubbery tissue, and fibrous texture was very strongly felt. Meltability in the mouth was also favorable, and meat-like texture was felt. In particular, in Examples 2 and 3, chewy texture was felt and fibrous texture was felt very strongly, and at the same time, hard meat-like texture was felt with good meltability in the mouth.

In Comparative Example 3, roughness was felt without fibrous texture, and meltability in the mouth was poor.

In Examples 4 and 6, fibrous texture was felt, which was slightly good. In Example 5, fibrous texture was strongly felt, which was good.

The above results reveal that a textured protein material produced by blending an oil-in-water emulsion as a raw material has a texture closer to meat-like texture than that of a textured protein material produced by blending single fat as a raw material.

The results of Example 1 and Comparative Example 3 reveal that a certain content of protein is required in the textured protein material in order to provide fibrous texture. It is therefore considered that the protein content needs to be 20% or more in order to create suitable fibrous texture.

### (Measurement of maximum load)

In the sensory evaluation, the "hardness", which is one of the factors by which fibrous texture may be felt, was quantitatively evaluated.

Specifically, the maximum load was analyzed with a texture analyzer (CREEPMETER RE2-3305C, manufactured by Yamaden Co., Ltd.). That is, the maximum load was used as an index of the hardness in biting.

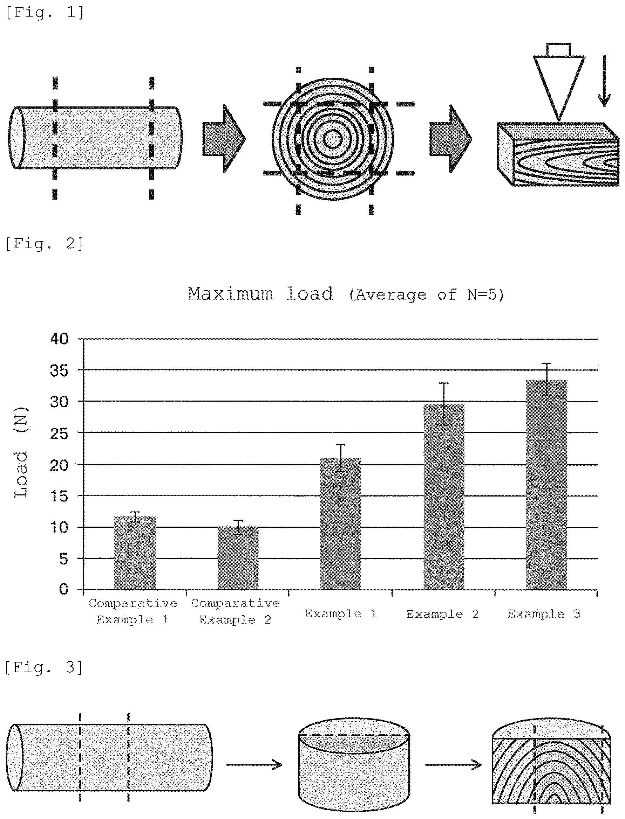

First, the cylindrical textured protein material with a diameter of 2 cm obtained in each of Examples 1 to 3 and Comparative Examples 1 to 2 was cut into a rectangular parallelepiped of 1 cm square × 2 cm in height as illustrated in Fig. 1. Then, the maximum load was measured at a speed of 1 mm/s using a wedge-shaped (tip angle: 30°) plunger. The maximum load was measured (n = 5), and the average of the measurements was shown in Fig. 2.

From Fig. 2, Comparative Example 1 and Comparative Example 2 result in similar maximum loads, but in Examples 1 to 3 in which an oil-in-water emulsion was added, the maximum load increased as compared with Comparative Examples 1 and 2. In particular, in Examples 2 and 3, the maximum load was about three times as large as that in Comparative Example 1, which matched the sensory evaluation result of fibrous texture.

Although fibrous texture is not generally expressed by hardness, it is difficult to feel fibrous texture with soft texture, and it is considered that the hardness generated by blending the oil-in-water emulsion contributes to fibrous texture.

Next, the tissue of the textured protein material was observed. In particular, Examples 2 and 3, which were evaluated as having fibrous texture, were observed by the following method.

### (Section preparation method)

1. A sample was formed as illustrated in Fig. 3, and the shaded portion was used as an observation surface.
2. The sample was embedded in 3% carboxymethyl cellulose (CMC) and frozen, and then a 10 um section thereof was prepared with a freezing microtome.
3. The section was stained by the method described in JP 4780099 B, and observed with an optical microscope.

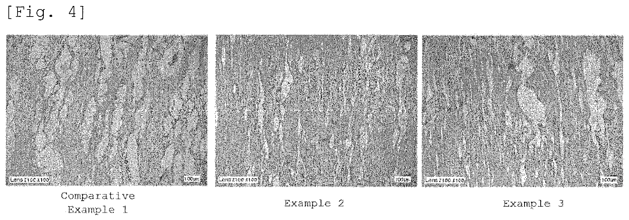

The results are shown in Fig. 4 below.

In Fig. 4, the number of voids in the tissues of Examples 2 and 3 is clearly smaller than that in Comparative Example 1. The number of fibers is also clearly increased. As can be seen from these photographs, there were many fibers and the tissue was dense. Thus, the same results as those of the sensory evaluation of Examples 2 and 3 in which the oil-in-water emulsion was blended were obtained.

The above results reveal that by introducing a raw material containing an oil-in-water emulsion and a powdery protein material into an extruder and extruding the raw material from a cooling die, a textured protein material containing 40 to 79.9 wt% moisture, 20 to 40 wt% protein, and 0.1 to 15 wt% fat, having a maximum load of 15 N or more, and having a dense meat-like fiber structure can be obtained, and this textured protein material has suitable hardness and favorable meltability in the mouth.

## Claims

1. A textured protein material having the following characteristics (A) to (C):
(A) the textured protein material comprises 40 to 79.9 wt% moisture, 20 to 40 wt% protein, and 0.1 to 15 wt% fat;
(B) the textured protein material has a maximum load of 15N or more; and
(C) the textured protein material has a dense meat-like fiber structure.

2. A method for producing a textured protein material having the following characteristics (A) to (C), the method comprising:
introducing a raw material comprising: an oil-in-water emulsion comprising water and fat, and a powdery or granular protein raw material, into an extruder, kneading, pressurizing and heating the raw material, and extruding the raw material under normal pressure from a cooling die installed at an outlet of the extruder to texturize the raw material:
(A) the textured protein material comprises 40 to 79.9 wt% moisture, 20 to 40 wt% protein, and 0.1 to 15 wt% fat;
(B) the textured protein material has a maximum load of 15N or more; and
(C) the textured protein material has a dense meat-like fiber structure.

3. The method for producing a textured protein material according to claim 2, wherein the oil-in-water emulsion further comprises a protein raw material.

4. The method for producing a textured protein material according to claim 2 or 3, wherein the raw material comprises 0.1 to 30 wt% oil-in-water emulsion and 10 to 40 wt% powdery or granular protein material.

5. The method for producing a textured protein material according to claim 2, wherein the oil-in-water emulsion comprises 5 to 70 wt% fat.

6. The method for producing a textured protein material according to claim 3, wherein the oil-in-water emulsion comprises 5 to 70 wt% fat.

7. The method for producing a textured protein material according to claim 4, wherein the oil-in-water emulsion comprises 5 to 70 wt% fat.

8. The method for producing a textured protein material according to claim 5, wherein the oil-in-water emulsion comprises 5 to 70 wt% fat and 1 to 8 wt% protein raw material.

9. The method for producing a textured protein material according to claim 6, wherein the oil-in-water emulsion comprises 5 to 70 wt% fat and 1 to 8 wt% protein raw material.

10. The method for producing a textured protein material according to claim 7, wherein the oil-in-water emulsion comprises 5 to 70 wt% fat and 1 to 8 wt% protein raw material.

11. The method for producing a textured protein material according to claim 8, wherein the oil-in-water emulsion comprises 5 to 70 wt% fat and 1 to 8 wt% protein raw material.

12. A meat substitute comprising the textured protein material according to claim 1.

13. Use of the textured protein material according to claim 1 as a meat substitute.
